# EUROPÄISCHE PATENTANMELDUNG

(11) **EP 4 610 451 A1**
(43) Veröffentlichungstag der Anmeldung: **03.09.2025**
(21) Anmeldenummer: 25159793.6
(22) Anmeldetag: 25.02.2025
(51) Int. Cl.: E04H 1/00, B33Y 80/00, E04B 1/343, E04B 1/348

(54) **CONTAINERHAUS**

(30) Priorität: 01.03.2024 DE 102024105955
(71) Anmelder: Krettek, Guntram, 41749 Viersen (DE)
(72) Erfinder: Krettek, Guntram, 41749 Viersen (DE)
(74) Vertreter: Weisse, Moltmann & Willems PartGmbB

(57) **Zusammenfassung**

Die Erfindung betrifft ein Containermodul (10) umfassend einen Raumkörper (12) mit Seitenwänden (14, 16), Boden (18) und Dach (22), wobei der Raumkörper (12) einen Zugang (30) aufweist. Ferner betrifft die Erfindung ein Verfahren zum Herstellen eines solchen Containermoduls (10), insbesondere in einer "Cradle to Cradle"-Ausführung.

## Beschreibung

### Technisches Gebiet

Die Erfindung betrifft ein Containermodul umfassend einen Raumkörper mit Seitenwänden, Boden und Dach, wobei der Raumkörper einen Zugang aufweist. Weiterhin betrifft die Erfindung ein Verfahren zum Herstellen eines solchen Containermoduls.

### Beschreibung

Solche Containermodule werden vielfältig eingesetzt. Sie werden beispielsweise als temporärer Hausersatz genutzt, wenn das eigentliche Haus gebaut oder renoviert wird. Ganze Büros oder Schulklassen lassen sich in solchen mobilen Containermodulen unterbringen. Ein weiteres Anwendungsbeispiel für solche Containermodule findet sich auch im Katastrophenschutz. So nutzt beispielsweise das Technische Hilfswerk oder das Rote Kreuz Containermodule für kurzfristige Unterbringungsmöglichkeiten. Selbst ganze Krankenhäuser mit Operationssaal lassen sich bereits mit diesen Containermodulen für temporäre Einsätze realisieren. Oft gibt es auch militärische Anwendungen. Containermodule dienen dann z.B. als verlegbare Kommando- oder Steuerstände.

Die Containermodule sind mit Lastkraftwagen, Schiffen oder Flugzeugen gut transportierbar. Sie sind quaderförmige Raumkörper, die sich vorteilhaft stapeln lassen. So können mehrstöckige Containerhäuser entstehen. In solchen Containermodulen lassen sich Güter lagern und wegen ihrer genormten Form einfach transportieren.

Die Containermodule bestehen oft aus quaderförmig angeordneten Wellblechplatten und sind je nach Einsatz auch mit Isolier- bzw. Dämmmaterial ausgekleidet.

Durch die immer knapper und teurer werdenden Grundstücke und damit einhergehenden teurer werdenden Wohnraum sind sogenannte "Tiny-Houses" eine beliebte Alternative. Diese "Tiny-Houses" bzw. Kleinsthäuser vereinen vollständige Wohnung mit Elektro-, Gas- und Wasserinstallation auf engstem bzw. kleinstmöglichen Raum. Solche Kleinsthäuser können als Fertighäuser hergestellt werden und als Containerhäuser mit einem Lastkraftwagen an seinen Stellplatz gebracht werden.

Solche Kleinsthäuser bestehen aus Metall, Kunststoff, Vebundmaterialien oder Holz.

### Stand der Technik

In der DE 10 2018 127 871 A1 sind bei kompakten verlagerbaren Wohneinheiten Steifigkeit und Variabilität sowie vorteilhafte Montierbarkeit wichtige Anforderungen an einen konstruktiven Aufbau. Dort wird ein Montage-Bausatz für eine Rahmenkonstruktion einer autonom mobilen oder verlagerbaren Wohneinheit in Modulbauweise vorgeschlagen. Dabei umfasst eine Bodengruppe wenigstens zwei Längsträger, die mittels einer Mehrzahl von Querträgern aneinander abgestützt sind. Außerdem ist eine Seitengruppe und eine Dachgruppe vorgesehen. Die Bodengruppe weist eine Mehrzahl von Bodenmodulen auf. Dabei sind die Querträger in Längsrichtung beabstandet zueinander angeordnet. Dadurch definieren jeweils paarweise zwischen einander eine Aufnahmekavität für wenigstens eines der Bodenmodule derart, dass die Bodenmodule in den Aufnahmekavitäten formschlüssig abgestützt an gegenüberliegenden Trägern der Bodengruppe einen Bodenbereich der Rahmenkonstruktion bilden. Dieser dient im Bodenbereich als Fundament-Funktion zur bodenseitigen Abstützung der Wohneinheit. Dabei ist die Rahmenkonstruktion selbsttragend. Hierdurch lässt sich bei hoher Variabilität und Steifigkeit auch eine einfache Montage realisieren.

Die DE 10 2018 220 046 A1 beschreibt einen Wohncontainer, der als eine mobile Wohneinheit mit einem quaderförmigen, metallischen Strukturrahmen, ausgeführt ist. Der Wohncontainer umfasst einen Boden, Seitenwände, und Stirnwände mit wenigstens einem Fenster und einer Tür. Ferner sind ein Dach, sowie Einrichtungsgegenstände und eine Elektro- und Wasserinstallation vorgesehen. Zumindest die Seitenwände und die Stirnwände des Wohncontainers schließen innenseitig eine Vakuumdämmung ein. Die Grundfläche des Wohncontainers entspricht einem genormten Container. In dem Wohncontainer ist ein Wohn-Schlafbereich mit integrierter Küchenzeile, eine Nasszelle sowie einen Technikraum integriert. Die jeweils ein Modul bildenden Einheiten des Innenraums sind multifunktional vernetzt. Alle Raumbegrenzungselemente des Wohncontainers weisen innenseitig ganzflächig eine wärmebrückenfreie, Vakuumdämmplatte einschließende Vakuumdämmung auf, die jeweils von zumindest einem Vorsatzelement kaschiert ist und der Wohncontainer außenseitig von einem Trapezblech umschlossen ist.

Die DE 10 2019 006 690 A1 beschreibt ein mobiles kleines Land/Seehaus, das abgesehen von rechtlichen Einschränkungen überall aufgebaut und auf Zeit oder dauerhaft genutzt bzw. bewohnt werden kann. Dass ist sowohl in Flur und Wald, in Dorf und Stadt, auf Campingplätzen, in Höfen und Gärten, in jeder Baulücke, auf Flachdächern vorhandener Gebäude oder schwimmend auf einem Teich, einem See oder Fluss möglich. Das Land/Seehaus besteht aus streifenförmigen stabilen Sandwichelementen mit sehr guten Dämmwerten, aus denen sich interessante und funktionell bemerkenswerte Wohnlösungen kreieren lassen. Auf Grund der in der Regel bereits auf der Bodenplatte vorgesehenen Sitzplätze wird das Wohnen zum großen Teil nach Draußen in die Natur verlagert, was von vielen Bewohnern als besonders angenehm empfunden wird. Das Land/Seehaus kann mit Kombihülsen versehen, überall aufgestellt, verankert und auch erweitert werden. Es kann innen und außen zusätzlich verkleidet und durch abgestimmte Form- und Farbgebung in jede vorhandene Bebauung bzw. Umgebung sinn- und stilvoll eingefügt werden. Über den Umfang der Einrichtung und Ausstattung entscheidet der Nutzer selbst. Ein WC/Hygieneraum -Box für autarkes Wohnen ist immer Bestandteil des Land/Seehauses. Ein schneller Auf- und Abbau des Land/Seehauses, ein Standortswechsel, und auch ein Wechsel von Land auf Wasser und zurück sind jederzeit möglich.

Die bekannten Kleinsthäuser bzw. Containermodule haben den Nachteil, dass sie aufgrund ihrer Leichtbauweise weniger stabil sind und anfälliger für äußere Einflüsse sind, wie z.B. Temperatur und Schallempfindlichkeit. Oft lassen sich diese Kleinsthäuser in Leichtbauweise nur mit ausreichender Dämmung und Dämpfung gegen diese äußeren Einflüsse schützen.

Es sind keine Kleinsthäuser bekannt, die nach dem Prinzip "Cradle to Cradle" funktionieren. Das bedeutet, dass die Kleinsthäuser nach ihrem Lebenszyklus wieder vollständig recycelt werden.

### Offenbarung der Erfindung

Aufgabe der Erfindung ist es daher die Nachteile des Standes der Technik zu vermeiden und ein Kleinsthaus bzw. Containermodul zu schaffen, welches leicht herzustellen, stabil und nachhaltig ist und ferner nicht so stark auf äußere Einflüsse, wie beispielsweise Wind, Lärm oder Temperatur, reagiert. Außerdem soll die Möglichkeit geschaffen werden, dass die Materialien des Kleinsthauses bzw. des Containermoduls vollständig recyclebar sind.

Erfindungsgemäß wird die Aufgabe dadurch gelöst, dass bei einem Containermodul der eingangs genannter Art die Seitenwände, der Boden und/oder das Dach eine Betonschicht aufweisen oder aus Beton bestehen. Weiterhin wird die Aufgabe durch ein Verfahren der eingangs genannter Art gelöst, wobei der Raumkörper ganz oder teilweise aus Beton mittels Beton-3D-Druckverfahren erzeugt wird. Dabei wird das Containermodul in einem 3D-Druckverfahren hergestellt. Als Ausgangsmaterial wird Beton verwendet.

Beton ist ein Baustoff, der den Ruf genießt, relativ beständig zu sein. Daher wird er oft im Massivbau eingesetzt. Beton hat die Eigenschaft zunächst gießfähig zu sein und kann somit vor dem Aushärten in beliebige Formen gegossen werden. Hierdurch lässt sich insbesondere z.B. eine monolithische Konstruktion erstellen. Allerdings wird Beton nicht für Containermodule bzw. Kleinsthäuser vor allem wegen seines hohen Gewichts eingesetzt. Die Erfindung beruht daher auf dem Prinzip, trotz des relativ hohen Gewichts gegenüber anderen Baustoffen für Fertighäuser, diesen Werkstoff einzusetzen. Es hat sich nämlich überraschenderweise gezeigt, dass sich Beton auch für "Tiny-Houses" bzw. Kleinsthäuser problemlos verwenden lässt. Beton ist sehr witterungsbeständig, wenig anfällig für äußere Einflüsse, wie Temperatur. Sie lassen sich zudem relativ einfach seriell herstellen. Die Containermodule können dabei auch aus zuvor angefertigten Betonplatten zusammengesteckt werden. Hierfür ist ein geeignetes Stecksystem angedacht. Diese Betonplatten lassen sich durchaus auch leicht bzw. getrennt mit Lastkraftwagen transportieren, so dass das Gewicht die Transportfähigkeit in dem Fall nicht mehr einschränkt.

Alternativ kann ein solches Tiny-House in einer bevorzugten Ausgestaltung auch in einer Einheit, quasi als einheitliche bzw. monolithische Konstruktion, hergestellt sein. Eine entsprechende gießtechnische Verdichtung ermöglicht eine nahezu wasserdichte Ausführung. Die Verwendung von Farben im Innenbereich, aber speziell im Außenbereich ist somit nicht notwendig. Zusätzlich können beispielsweise die außenliegenden Oberflächen durch den Einsatz bzw. die Benetzung von Wasserglas (Silicagel) in eine regendichte Konstruktion überführt werden. Gleiches gilt für die Fundamentierung, wie aber auch der Dachkonstruktion. Damit kann eine bitumenbasierte Dachisolierung bzw. Dachabdichtung entfallen.

Die verwindungssteife Konstruktion führt ferner dazu, dass eine spezielle Fundamentierung des Tiny-Houses nicht notwendig ist. Dies bedeutet, dass in der Regel ein ebener vorbereiteter Boden zur Aufnahme, Fundamentierung und Absetzen völlig ausreichend ist. Somit ist das Erstellen eines herkömmlichen Fundaments nicht mehr erforderlich. Dies gilt einschließlich für Punkt- wie aber auch Streifenfundamente.

Gleiches gilt auch für z. B. die Dachbegrünung. Hierzu können "Beton-Poolframes" verwendet werden. Dazu wird ein Rahmen aufgesetzt und mit beispielsweise einer Teichfolie gegenüber der Containerdecke/-dach zusätzlich abgedichtet. Ein Verschweißen ist nicht vorgesehen. Eine einfache Entfernung der vorkonfektionierten Gründachhaut ist gegeben.

Durch den Rahmen auf dem Dach kann z.B. der für die Fundamentvorbereitung/Egalisierung entfernte Mutterboden deponiert werden und nach Anlieferung auf dem Dach als Dachgarten Wiederverwendung finden. Somit wird der Flächenverbrauch des Ökosystems auf "0" gesetzt, womit eine übliche Ortsveränderung der biologischen Materialien verhindert wird. Auch ist denkbar, auf dem Dach ein Gewächshaus vorzusehen.

Zur Erhöhung der Stabilität eines solchen erfindungsgemäßen Containermoduls sind in einer vorteilhaften Ausgestaltung die Seitenwände, der Boden und/oder das Dach eine Stahlbetonkonstruktion enthalten. Stahlbeton ist einer der stabilsten Baumaterialien. So lassen sich Stahlgitter in die Seitenwände, Decke und/oder Boden bei der Herstellung einsetzen. Das Containermodul erhält nach dem Aushärten des Betons eine besondere Stabilität mit ausrechender Elastizität gegenüber reinen Betonkonstruktionen. Hierdurch kann zudem die Dicke der Seitenwände, der Decken und/oder der Böden bei solchen Containermodulen reduziert werden. Sie lassen sich zudem in einem geschlossenen Raum herstellen.

In einer vorteilhaften Ausgestaltung des erfindungsgemäßen Containermoduls weisen die Seitenwände, der Boden und/oder das Dach eine Isolationsschicht auf. Um den Innenraum des Containermoduls vor Wärme oder Kälte zu schützen ist die Isolierschicht vorgesehen. Die Isolierschicht kann so ausgestaltet sein, dass sie auch gegen Schall dämmt. Das Containermodul lässt sich dann z.B. als Musikraum oder als Schallschutzraum für sonstige lärmerzeugende Aktivitäten nutzen. Entsprechend dringt auch nur wenig Schall von außen, z.B. durch Straßenlärm in das Containermodul. Die Isolationsschicht sollte dabei so ausgeführt und eingesetzt werden, dass sie beim Rückbau des Containermoduls eine einfache Separierung und ggf. Zerkleinerung ermöglicht.

Eine besonders vorteilhafte Ausgestaltung des erfindungsgemäßen Containermoduls besteht ferner darin, dass die Seitenwände und/oder das Dach doppelt mit einer Innenschicht und einer Außenschicht vorgesehen sind, wobei die Innenschicht und die Außenschicht einen vorzugsweise gasdichten Zwischenraum bilden, wobei die Isolationsschicht in dem Zwischenraum vorgesehen ist. Diese Maßnahme dient dazu, das Containermodul optimal zu isolieren. Sofern der der Zwischenraum gasdicht ausgebildet ist, kann ein Gas eine Isolationsschicht in dem Zwischenraum bilden. Hierfür eignet sich z.B. Luft, als schlechter Wärmeleiter. Die Innenschicht kann mit einer Schicht, z.B. mit einer Lehmschicht, verputzt sein, um ein angenehmes Raumklima zu erzeugen.

Vorzugsweise kann anstelle von Luft, auch ein Inertgas als Isolationsschicht eingesetzt werden. Inertgase haben eine noch schlechtere Wärmeleitfähigkeit, als Luft. Insofern kann das Volumen des Zwischenraums zwischen Innen- und Außenschicht noch geringer ausfallen.

Eine bevorzugte Ausbildung des erfindungsgemäßen Containermoduls ergibt sich ferner darin, dass die Isolationsschicht Dämmelemente bzw. -platten und/oder Vakuumdämmplatten umfasst. Anstelle von den zuvor genannten Gasen als Isolationsschicht können auch Festkörper als Wärmeisolation dienen. Als Dämmelemente eignen sich beispielsweise Steinwoll- oder Styropor-Dämmplatten.

Eine besonders vorteilhafte Ausbildung des erfindungsgemäßen Containermoduls besteht darin, dass der Boden einen doppelten Boden mit einem Zwischenraum aufweist, wobei Versorgungsleitungen und/oder Behältnisse in dem Zwischenraum geführt werden. Diese Maßnahme dient dazu, dass die Versorgungsleitungen, wie beispielsweise Strom-, Wasser-, Abwasser-, Gasleitungen und/oder Fußbodenheizung geordnet verstaut sind. Auch Behältnisse, wie z.B. Tanks für Frisch- und Abwasser oder auch Brennstoff können dort angeordnet werden. Sie liegen damit nicht mehr störend im Innenraum. Durch eine oder mehrere geeignete Klappen in dem doppelten Boden sind die Versorgungsleitungen leicht zugänglich zu machen. Anschlüsse, wie Steckdosen, lassen sich im Boden bzw. nur im Boden verbauen. Der doppelte Boden kann auch aus einem anderen Baustoff sein, wie das Containermodul selbst, z.B. Holz. Die Unterbringung sämtlicher Versorgungsleitungen und Behältnisse in dem Zwischenraum des doppelten Bodens vermeidet zusätzliche Kanäle und erleichtert beim Recyceln des Tiny-Houses die Trennung der verschiedenen Baustoffe.

Die Versorgungsinstallationen befinden sich in dem Zwischenraum. Die elektrischen Versorgungsleitungen sind dabei vorzugsweise als Kabelstränge ausgebildet, welche lösbar montiert sind. Hierdurch können die Kabelstränge bei einem Rückbau des Containermoduls leicht entfernt werden. Das erleichtert eine Trennung und ein Recycling der verwendeten Materialien. Hierdurch wird zudem vermieden, dass die elektrischen Leitungen nicht beliebig und durcheinander in dem Zwischenraum verlaufen, was ein Auffinden und Entfernen der Kabel beim Rückbau erschwert. Da die verwendeten Materialien, wie Kabelstränge, Leitungen Wände und dergleichen möglichst separat in dem Containermodul verbaut werden, können Sie auch bei einer Entkernung leicht separiert und recycelt werden.

Zur Vermeidung von elektrischen Versorgungs- bzw. Steuerleitungen, welche in dem Containermodul installiert werden müssen, können vorzugsweise elektrische Funktionselemente des Containermoduls kabellos steuerbar ausgebildet sein. Hierbei kann beispielsweise eine Funk- oder Infrarotfernbedienung als Steuereinheit eingesetzt werden. Dies beinhaltet auch das "modernste und energiesparende Elektronik", wie zum Beispiel LED-Licht, Verwendung findet.

Der doppelte Boden bildet einen Kassettenboden. Durch geschickte Konstruktion des Kassettenbodens wird nicht nur durch diese Methode eine wesentliche Versteifung des Gebäudes gegeben, gleichzeitig wird hierdurch eine schwingungsstabile Einheit erreicht, die den Transport über weite Wege - und dieses auch mehrfach - ermöglicht. Die Kassetten können durch Stahlbeton mit vorgegebenen Bruchkanten auf einer festigkeitsbasierten Höhe gebildet werden. Die Leitungsverlegung der Versorgungsleitungen können bei einem standardisierten Guss nachträglich leicht entfernt werden. Für einen späteren Rückbau bzw. zum Recyceln ist die Trennung der einzelnen Materialien und Baustoffe erheblich vereinfacht. Dieses ist beispielsweise bei klassischen Tiny-Houses, die in der Regel in Holzkonstruktionen mit filigraner Installation von Gas, Wasser, Strom hergestellt werden, nicht gegeben. Der Kassettenboden kann auch dazu benutzt werden, Möbelstücke, wie zum Beispiel Betten zu versenken. Über eine Hydraulik bzw. über Druckfedern kann ein solches Möbelstück bei Bedarf auf eine gewünschte Höhe angehoben und benutzt werden. Ein solches anheben kann beispielsweise auch elektromechanisch mittels elektrischen Motors oder manuell mit einer Spindel und Kurbel durchgeführt werden. Im unbenutzten Zustand wird es entsprechend abgesenkt. Hierdurch entsteht zusätzlicher Platz der u.U. in den relativ beengten Räumlichkeiten benötigt wird. Damit wird eine maximale Raumausbeute erzielt.

Es wird durch den stabilen Kassettenboden vermieden, dass bei mehrfachem Transport sich Kabel- sowie Schraubverbindungen lösen und zum Ausfall bzw. totalen Funktionsausfall dieses Tiny-Houses führt. Im Hinblick auf Nachhaltigkeit wird ein Rückbau gerade bei einem solchen Tiny-House vereinfacht. Denn herkömmliche Konstruktionen (Filigrankonstruktionen) sind bei einem Rückbau äußerst zeit- und kostenintensiv. Somit werden im großen Maße finanzielle, wie auch humane Ressourcen in Anspruch genommen bzw. verbraucht.

Eine weitere vorteilhafte Ausbildung des erfindungsgemäßen Containermoduls ergibt sich dadurch, dass Kopplungsmittel zum Andocken zumindest eines weiteren Containermoduls vorgesehen sind. Oft reicht der Raum eines einzigen Containermoduls nicht aus. Daher dient diese Maßnahme dazu mehrere Containermodule zu einer Einheit zusammenzufügen. Hierfür müssen geeignete Verbindungselemente vorhanden sein, die die Containermodule lösbar miteinander verbinden. Diese Verbindungselemente können dabei beispielsweise schraubbar, steckbar und/oder rastbar ausgebildet sein. Durch unterschiedlich konfigurierte Wohnmodule lässt sich auch eine hohe Variantenfähigkeit der Wohn- bzw. Arbeitsumgebung erreichen. Andockbare Rinnenkonstruktionen können dabei zusätzlich an die Wohnmodule angebracht werden. Von Stufenmodul- über Pyramidenkonstruktionen bis hin zu Carports oder Tiefgaragen sind in solchen Konfigurationen, insbesondere auch stapelbar, möglich.

Das Konzept des erfindungsgemäßen Containermoduls ist als Mehrgenerationenfokus konzipiert. Das bedeutet, dass das Containermodul auch bei Familienzuwachs entsprechend mitwachsen kann. Durch Andocken weiterer generationsgerechter Containermodule kann der Wohnbedarf theoretisch beliebig erweitert werden. Auf diese Weise lässt sich auch ein Containermodul so ausgestalten, dass eine Minigarage für einen Rollstuhl oder der platzsparende Einbau eines Liftes vorgesehen ist.

Eine besonders bevorzugte Variante des erfindungsgemäßen Containermoduls wird dadurch erzielt, dass eine Schnittstelle nach außen, insbesondere für Versorgungsleitungen zu einem weiteren Containermodul mit entsprechender Schnittstelle besteht. Mit dieser Maßnahme können auch die Ressourcen zwischen einem Versorger und/oder anderen Containermodulen auf einfache Weise ausgetauscht werden. Dazu sind die Anschlüsse der Schnittstelle vorzugsweise genormt. Sie befinden sich bevorzugt im Zwischenraum des doppelten Bodens, was eine zusätzliche Isolationswirkung gegen Hitze und Kälte etc. bewirkt. Grundsätzlich lässt sich aber auch ein Adapter bei verschiedenartigen Schnittstellen verwenden.

Um das erfindungsgemäße Containermodul möglichst autark zu gestalten, ist in einer bevorzugten Ausgestaltung ein Solarmodul und/oder Windkraftanlage als Spannungsversorgung für das Containermodul an einer Seitenwand und/oder auf dem Dach. Solarstrom oder Windkraft hilft nicht nur bei der Klimaneutralität des Containermoduls. Vielmehr kann es auch an solchen Orten eingesetzt werden, an denen es keine Stromversorgung gibt. Um auch bei relativ geringer Stromausbeute der Solarmodule bzw. geringem Wind noch ausreichend elektrische Energie zur Verfügung zu haben, werden vorzugsweise solche elektrischen Komponenten, wie LED-Licht oder moderne Elektronikgeräte, eingesetzt, welche mit wenig elektrischer Energie auskommen. Die Solarmodule können auch einen Teil der Isolierung des Containermoduls übernehmen.

Eine weitere vorteilhafte Ausbildung des erfindungsgemäßen Containermoduls wird dadurch erreicht, dass ein Durchgang zu einem weiteren Containermodul vorsehbar ist. Damit können mehrere Containermodule zusammengefügt und der Innenraum miteinander verbunden werden. Dies erlaubt den Innenraum, der dann von der Anzahl der Containermodule abhängt, theoretisch beliebig zu vergrößern. Der Durchgang kann dabei in alle Richtungen vorgesehen sein. Dies betrifft auch übereinander angeordnete Containermodule. Zur Abdichtung des Durchgangs können bevorzugt Expansionsdichtungen eingesetzt werden.

Vorzugsweise sind in dem erfindungsgemäßen Containermodul Wände vorgesehen. Diese Wände erlauben es, das Containermodul selbst noch einmal in mehrere Raumabschnitte zu unterteilen. So lässt sich z.B. eine Nasszelle einrichten, die vom übrigen Raum des Containermoduls abgetrennt ist.

In einer weiteren vorteilhaften Ausgestaltung des erfindungsgemäßen Containermoduls sind ein Fenster und/oder Lichteinlässe vorgesehen. Um unabhängig von künstlichem Licht in einem solchen Containermodul zu sein, ist wenigstens ein Fenster oder ein sonstiger Lichteinlass vorgesehen, so dass auch Tageslicht in den Innenraum gelangen kann, was ihn tatsächlich erst vernünftig bewohnbar macht.

Eine bevorzugte Ausgestaltung des erfindungsgemäßen Containermoduls wird dadurch erreicht, dass der Raumkörper eine quaderförmige oder eine sonstige stapelbare Geometrie aufweist. Damit können die Containermodule zu einer größeren Einheit gestapelt werden. Sie lassen sich mit der geeigneten Geometrie nebeneinander oder übereinander anordnen.

In einer weiteren vorteilhaften Ausbildung des erfindungsgemäßen Containermoduls weist der Raumkörper Stützen zum Ausgleichen von Geländeunebenheiten und/oder Mittel für einen Transport auf.

Weitere Ausgestaltungen und Vorteile ergeben sich aus dem Gegenstand der Unteransprüche sowie den Zeichnungen mit den dazugehörigen Beschreibungen. Ausführungsbeispiele sind nachstehend unter Bezugnahme auf die beigefügten Zeichnungen näher erläutert. Die Erfindung soll nicht alleine auf diese aufgeführten Ausführungsbeispiele beschränkt werden. Sie dienen lediglich zur näheren Erläuterung der Erfindung. Die vorliegende Erfindung soll sich auf alle Gegenstände beziehen, die jetzt und zukünftig der Fachmann als naheliegend zur Realisierung der Erfindung heranziehen würde.

### Kurze Beschreibung der Zeichnung

- Fig. 1: zeigt in einer schematischen Prinzipskizze das Ausführungsbeispiel eines erfindungsgemäßen Containermoduls in einer perspektivischen Darstellung.
- Fig. 2: zeigt das Containermodul gemäß Fig. 1 in einem vertikalen Schnitt.
- Fig. 3: zeigt das Containermodul gemäß den Fig. 1 und 2 in einem horizontalen Schnitt.
- Fig. 4: zeigt zwei zusammengefügte Containermodule gemäß den Fig. 1 bis 3 in einer Draufsicht.
- Fig. 5: zeigt mehrere gestapelte Containermodule gemäß den Fig. 1 bis 3 in einer Seitendarstellung.

### Bevorzugtes Ausführungsbeispiel

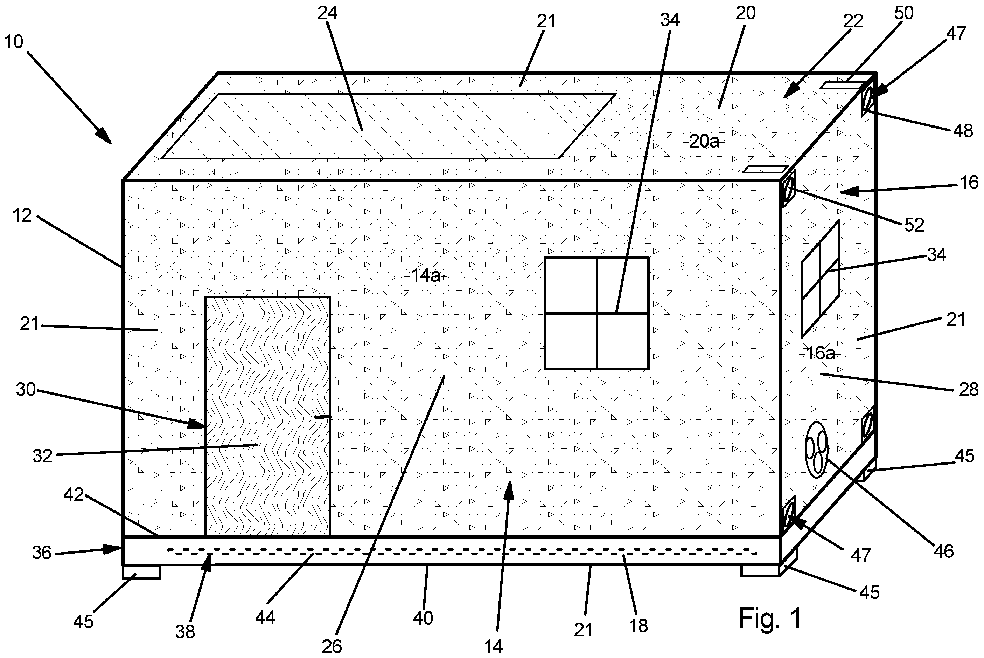

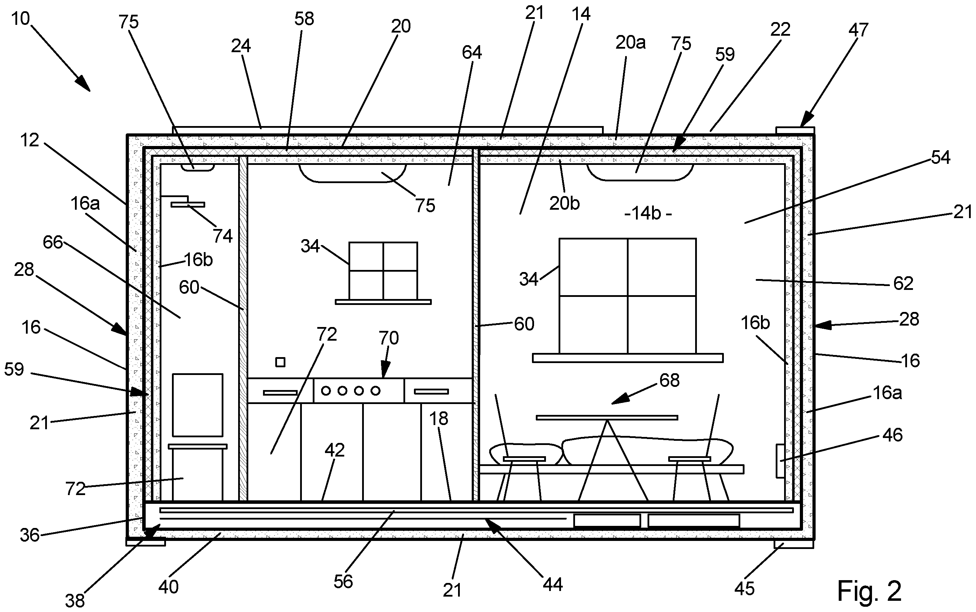

Die Fig. 1 zeigt ein Ausführungsbeispiel eines erfindungsgemäßen Containermoduls 10 in einer schematischen Prinzipskizze. Das Containermodul 10 wird in dieser Abbildung perspektivisch als "Tiny-House" dargestellt. Das Containermodul 10 ist ein quaderförmiger Raumkörper 12. Der Raumkörper 12 des Containermoduls 10 umfasst vier vertikale Wände 14, 16, einen Boden 18 und eine Decke 20. Die vertikalen Wände 14, 16, der Boden 18 und die Decke 20 bestehen jeweils zumindest aus einer Schicht Betonplatten 21. Im vorliegenden Ausführungsbeispiel weisen die vertikalen Wände 14, 16 und die Decke 20 jeweils eine Außenschicht 14a, 16a, 20a und jeweils eine Innenschicht 14b, 16b 20b auf (siehe auch Fig. 2). Diese Betonplatten 21 bestehen wegen seiner großen Stabilität aus Beton mit einer Armierung, wie beispielsweise Stahl, Glas oder Kohlefaser.

Diese Betonplatten 21 sind mit nicht sichtbaren Bolzen zusammengesteckt und mit geeigneten Verschraubungen verankert. Grundsätzlich lässt sich ein solches Containermodul 10 auch aus einem monolithischen Stück gießen oder im 3D-Druckverfahren mit Beton drucken, so dass z.B. auf Bolzen verzichtet werden kann. Alternativ können die Betonplatten 21 zum Verbinden auch als Stecksystem ausgebildet und/oder ineinander geschachtelt sein. Die Decke 20 bildet dabei ein Dach bzw. Flachdach 22 aus. Ein Spitzdach ist bei einem solchen Tiny-House natürlich auch denkbar, welches dann nicht notwendigerweise aus Beton bestehen muss. Ein Spitzdach kann beispielsweise auch aus Holz oder Dachziegeln vorgesehen sein. Auf dem Flachdach 22 sind Solarmodule 24 angeordnet. Die Solarmodule 24 dienen in diesem Ausführungsbeispiel einerseits zur thermischen Warmwasseraufbereitung und anderseits zur Solarstromerzeugung.

Die Wände 14 bilden die längere Frontseite 26 bzw. Hinterseite des quaderförmigen Raumkörpers 12 und die Wände 16 bilden die kürzeren Seitenwände 28. In der Frontseite 26 des Raumkörpers 12 ist ein Zugang 30 mit einer Tür 32 integriert, welche es ermöglicht von außen in das Containermodul 10 hinein und dort auch wieder heraus zu gelangen. In den Wänden 14 sind ferner Fenster 34 vorgesehen, wodurch der Raumkörper 12 mit Tageslicht durchflutet werden kann.

Der Boden 18 des Containermoduls 10 ist als doppelter Boden 36 mit einem Zwischenraum 38 vorgesehen. Der doppelte Boden 36 besteht dabei aus zwei parallelen Bodenplatten 40, 42, zwischen denen der Zwischenraum 38 gebildet wird. Auch die Wände 14, 16 und die Decke 20 können grundsätzlich mit einem entsprechenden Zwischenraum ausgebildet sein. Wenigstens eine der Bodenplatten 40 - hier die untere Bodenplatte - ist als Betonplatte 21 ausgestaltet. Die zweite Bodenplatte 42 - hier die obere Bodenplatte - kann dabei beispielsweise auch von einer Kunststoff- oder Holzplatte gebildet sein. In dem Zwischenraum 38 ist vorwiegend die Versorgungsinstallation 44 und ggf. Isolierung vorgesehen.

Verstellbare Stützen 45 gleichen beim Aufstellen des Containermoduls 10 Geländeunebenheiten bei Bedarf aus. Den Stützen 45 können dabei ihre Länge z.B. hydraulisch oder über eine Gewindestange verändern. Die Stützen 45 sind, sofern erforderlich in geeigneter Weise unterhalb der unteren Bodenplatte 40 angeordnet.

In der Seitenwand 28 ist eine Schnittstelle 46 vorgesehen. Die Schnittstelle 46 verbindet das Containermodul 10 beispielsweise mit anderen Containermodulen, welche über die entsprechende Schnittstelle verfügen. Die Schnittstelle 46 kann aber auch dazu dienen, die Versorgung des Containermoduls 10 beispielsweise mit Strom, Gas oder Wasser bzw. Abwasser sicherzustellen.

Als Kopplungsmittel 47 dienen Verbindungsvorrichtungen 48, welche in diesem Ausführungsbeispiel aus Metallklammern 50 und Steckbolzen 52 bestehen. Diese Verbindungsvorrichtungen 48 ermöglichen es, wenigstens zwei Containermodule 10 dauerhaft aber lösbar - z. B. beim Transport - anzudocken und miteinander zu verbinden. Dabei greifen die Schnittstellen 46 zur Versorgung ineinander. Die Schnittstellen 46 sind dabei geeignete verbindbare Steckverbindungen, die sich auch leicht wieder lösen lassen. Sofern die Gegebenheiten, z.B. entsprechendem Untergrund, es zulassen, kann auf die Kopplungsmittel durchaus verzichtet werden.

Die Fig. 2 zeigt das Ausführungsbeispiel von Fig. 1, wobei das Containermodul 10 in einem vertikalen Längsschnitt dargestellt ist. Soweit sich die beiden Figuren entsprechen werden auch die gleichen Bezugszeichen verwendet. Der Raumkörper 12 des Containermoduls 10 umfasst die vier vertikalen Wände 14, 16, den Boden 18 und die Decke 20, welche aus Betonplatten 21 gebildet werden. Diese Betonplatten 21 sind, wie bereits ausgeführt, für die Bildung des Raumkörpers 12 zusammengesteckt und verschraubt oder in geeigneter Weise in einem oder mehreren Teilen aus Beton gegossen.

Die Frontseite 26 ist in dieser Schnittdarstellung nicht zu sehen nur die Hinterseite 54 des quaderförmigen Raumkörpers 12 ist in dieser Abbildung erkennbar. Die Wände 16 bilden die kürzeren Seitenwände 28. Die Wände 14 verfügen über die Fenster 34, wodurch der Raumkörper 12 mit Tageslicht durchströmt wird.

In dem Zwischenraum 38 des doppelten Bodens 36 ist die Versorgungsinstallation 44 vorgesehen. Die Versorgungsinstallation 44 umfasst Versorgungsleitungen 56, insbesondere für Strom, Gas oder Wasser bzw. Abwasser. Ebenso gehören Akkumulatoren, Generatoren, Wechselrichter, Druckminderer, Vorratsbehälter für Wasser und dergleichen zu einer solchen Versorgungsinstallation 44 durchaus dazu. Der Zwischenraum 38 des doppelten Bodens wird aus den zwei parallelen Bodenplatten 40, 42 hinreichend ausgestaltet. In diesem Ausführungsbeispiel ist die untere Bodenplatte 40 die Betonplatte 21. Die obere zweite Bodenplatte 42 besteht in diesem Ausführungsbeispiel aus einer Holzplatte.

Die Wände 14, 16, der Boden 18 und die Decke 20 sind mit einer Isolierschicht 58 gedämmt. Die Isolierschicht 58 ist dazu in einem Zwischenraum 59 zwischen den Außenschichten 14a, 16a, 20 und den Innenschichten 14b, 16b, 20b angeordnet. Als Dämmmaterial für die Isolierschicht 58 kann ein Gas, wie Luft und/oder ein Inertgas vorgesehen sein. Die Isolationsschicht kann aber auch mit Dämmelementen aus Steinwolle oder Vakuumdämmplatten gebildet werden.

Die Isolierschicht 58 ermöglicht es, die Temperatur des Innenraums des Containermoduls 10 einfach relativ konstant zu halten, auch wenn diese außerhalb größerer Schwankungen unterliegt. Außerdem dämmt die Isolierschicht 58 gegen übermäßigen Lärm. Als Raumteiler sind Zwischenwände 60 vorgesehen. Die Zwischenwände 60 unterteilen den Raumkörper 12 beispielhaft in drei Räume 62, 64, 66. Der Raum 62 ist dabei als Wohn- und/oder Schlafraum mit entsprechendem Wohnmobiliar 68, z.B. Tisch, Stühle, Bett, vorgesehen. Der Raum 64 ist als Küche mit einer Küchenzeile 70 ausgestaltet. Der Raum 66 ist eine Nasszelle, insbesondere mit Toilette 72 und Dusche 74. Beleuchtungsmittel 75 leuchten den Innenraum des Containermoduls 10 auch bei Dunkelheit aus. Die Schnittstellen 46 sind in dieser Abbildung ebenfalls angedeutet.

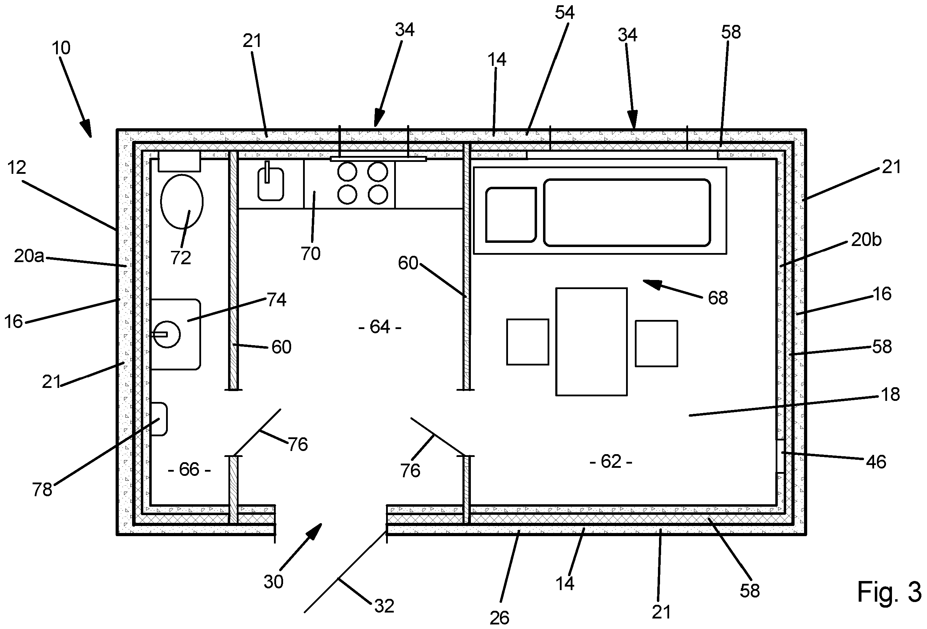

Fig. 3 zeigt das Containermodul 10 gemäß den Fig. 1 und 2 in einem horizontalen Schnitt. Soweit dieser Abbildung den vorherigen beiden Figuren entspricht, werden hier auch die gleichen Bezugszeichen verwendet.

Die Wände 14, 16, der Boden 18 und die Decke 20 sind als Außenflächen mit einer Isolierschicht 58 gedämmt. Wie hier deutlich zu sehen ist, unterteilen die Zwischenwände 60 den Raumkörper 12. Der Wohn- und/oder Schlafraum 62 weist das Wohnmobiliar 68, insbesondere mit Tisch, Stühlen und Bett auf. Der Wohn- und/oder Schlafraum 62 ist mit dem Küchenraum 64 über eine Zwischentür 76 mit der Küche 64 verbunden. Die Küche ist mit der Küchenzeile 70, welche einen Küchenschrank, Herd und ein Waschbecken beinhaltet, ausgestattet. Durch eine weitere Zwischentür 76, welche zwischen der Küche 64 und der Nasszelle 66 in der Zwischenwand 60 angeordnet ist, sind die beiden Räume 64, 66 begehbar miteinander verbunden. In der Nasszelle 66 ist die Toilette 72, die Dusche 74 und ein Waschbecken 78 dargestellt.

Die Wände 14, 16 sind aus extrem witterungsbeständigem Beton hergestellt. Die Isolierschicht 58 schützt den Innenraum des Containermoduls 10 insbesondere vor Temperaturschwankungen und Lärm.

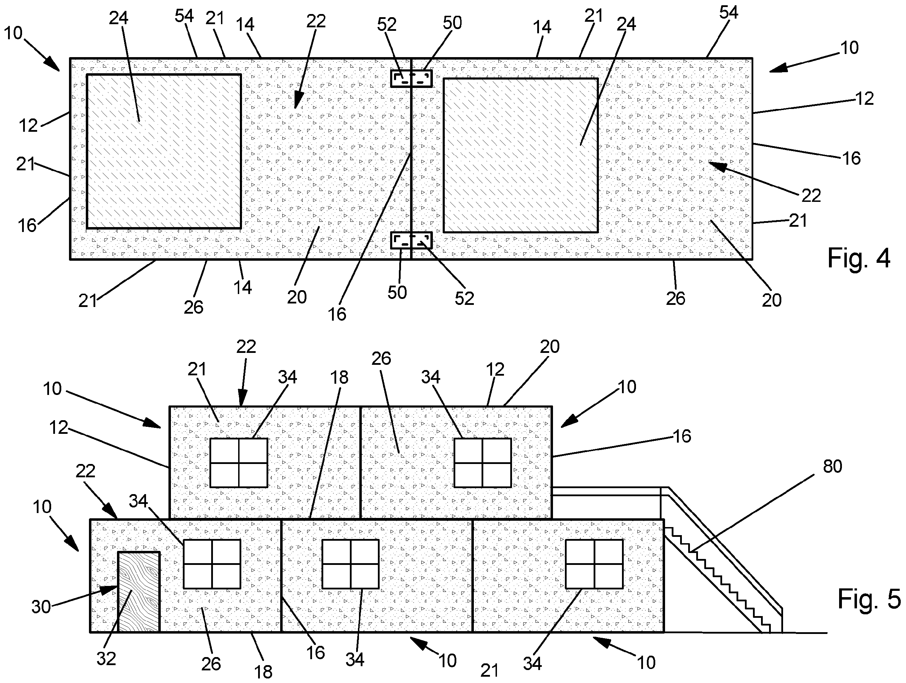

Die Fig. 4 zeigt zwei zusammengefügte Containermodule 10, wie sie in den Fig. 1 bis 3 beschrieben wurden. Die beiden Containermodule 10 sind in einer Draufsicht dargestellt. Soweit die Fig. 4 den vorherigen Fig. 1 bis 3 entspricht, werden auch hier die gleichen Bezugszeichen verwendet. In dieser Abbildung wird im Wesentlichen das Flachdach 22 der beiden Containermodule 10 gezeigt. Auf den Flachdächern 22 befinden sich die Solarmodule 24. Die Solarmodule 24 dienen hier zur Erzeugung von Strom und Warmwasser. Die Solarmodule 24 können bei Bedarf mit einer hier nicht dargestellten Vorrichtung, welche diese Zwecke ggf. automatisch erfüllt, auf die Sonne hin ausgerichtet werden. Als Option zur Isolierung kann eine begrünte Außenwand vorgesehen. Anstelle der Solarmodule kann auch das Dach 20 ganz oder teilweise mit Pflanzen begrünt sein.

Die beiden Raumkörper 12 der Containermodule 10 sind über die kürzere Wand 16 mit den Steckbolzen 52 miteinander verbunden. Die Metallklammern 50 verhindern dabei, dass sich die Steckverbindungen mit den Steckbolzen 52 selbstständig lösen können. Die Metallklammern 50 lassen sich auf einfache Weise entfernen. Dadurch können die Containermodule 10 auseinandergezogen werden und beispielsweise auf einem Lkw transportiert werden. Die Schnittstelle 46 für die Versorgungsleitungen 56, wie sie zu den vorherigen Figuren 1 bis 3 beschrieben wurde, ist als Steckverbindung zwischen den zwei Containermodulen 10 ausgebildet. Dadurch kann auch diese Verbindung beim Auseinanderziehen leicht getrennt werden.

Fig. 5 zeigt mehrere gestapelte Containermodule 10, wie sie in den Fig. 1 bis 3 gezeigt werden in einer Seitendarstellung. Soweit die Fig. 5 den vorherigen Figuren entspricht, werden auch hier die gleichen Bezugszeichen verwendet. Die Containermodule 10 sind aufgrund ihrer Stabilität durch die Betonkonstruktion extrem belastbar und können dadurch relativ hoch gestapelt werden, ohne dass die Statik darunter leidet. In diesem Ausführungsbeispiel ist ein Zugang 30 mit einer Tür 32 vorgesehen. Von diesem Containermodul 10 können alle anderen Containermodule 10 erreicht werden. Mit einer Treppe 80 können die oberen Containermodule 10 von außen erreicht werden. Grundsätzlich kann die Treppe 80 oder eine Leiter auch im Inneren der Containermodule 10 vorgesehen sein.

Im vorliegenden Ausführungsbeispiel der Figuren 1 bis 5 sind die Containermodule 10 aus Betonplatten 21 oder als einheitlicher bzw. monolithischer Betonkörper hergestellt. Die Betonplatten 21 sind dabei aus einem Stahlbeton, d.h. es sind Stahlmatten in den Betonplatten 21 verarbeitet. Üblicherweise werden diese Betonplatten 21 in geeigneten Formen gegossen. Diese Betonplatten 21 werden in den Raumkörper 12 zusammengesteckt und entsprechend verschraubt bzw. verklebt. Anstelle der Betonplatten 21 kann alternativ ein solches Containermodul 10 auch im Beton-3D-Druckverfahren hergestellt werden. Das Beton-3D-Druckverfahren ist ein 3D-Druckverfahren, bei dem Beton als Material für den Drucker verwendet wird. Somit können Teile oder auch das ganze Containermodul 10 in einem solchen 3D-Druckverfahren erzeugt werden. Hierdurch lassen sich die Containermodule extrem schnell an neue Gegebenheiten oder Kundenwünsche anpassen. Außerdem lässt sich so auf einfache Weise ein monolithischer Raumkörper 12 bilden, der weder verschraubt, noch mit Steckbolzen 52 zusammengehalten werden muss. Das Herstellen eines solchen Containermoduls lässt sich bei dieser Art sehr einfach vollautomatisch herstellen und auch entsprechend weitestgehend vollautomatisch zerlegen, separieren und recyceln.

### Bezugszeichenliste

| | |
|---|---|
| 10 | Containermodul |
| 12 | Raumkörper |
| 14 | Vertikale Wände |
| 14a | Außenschicht |
| 14b | Innenschicht |
| 16 | Vertikale Wände |
| 16a | Außenschicht |
| 16b | Innenschicht |
| 18 | Boden |
| 20 | Decke |
| 20a | Außenschicht |
| 20b | Innenschicht |
| 21 | Betonplatten |
| 22 | Flachdach |
| 24 | Solarmodul |
| 26 | Frontseite |
| 28 | Seitenwände |
| 30 | Zugang |
| 32 | Tür |
| 34 | Fenster |
| 36 | Doppelter Boden |
| 38 | Zwischenraum |
| 40 | Untere Bodenplatte |
| 42 | Obere Bodenplatte |
| 44 | Versorgungsinstallation |
| 45 | Stützen |
| 46 | Schnittstelle |
| 47 | Kopplungsmittel |

| | |
|---|---|
| 48 | Verbindungsvorrichtungen |
| 50 | Metallklammern |
| 52 | Steckbolzen |
| 54 | Hinterseite |
| 56 | Versorgungsleitungen |
| 58 | Isolierschicht |
| 59 | Zwischenraum |
| 60 | Zwischenwände |
| 62 | Wohn- und/oder Schlafraum |
| 64 | Küche |
| 66 | Nasszelle |
| 68 | Wohnmobiliar |
| 70 | Küchenzeile |
| 72 | Toilette |
| 74 | Dusche |
| 75 | Beleuchtungsmittel |
| 76 | Zwischentür |
| 78 | Waschbecken |
| 80 | Treppe |

## Patentansprüche

1. Containermodul (10) umfassend einen Raumkörper (12) mit Seitenwänden (14, 16), Boden (18) und Dach (22), wobei der Raumkörper (12) einen Zugang (30) aufweist, **dadurch gekennzeichnet, dass** die Seitenwände (14, 16), der Boden (18) und/oder das Dach (22) eine Betonschicht (21) aufweisen oder aus Beton (21) bestehen.

2. Containermodul (10) nach Anspruch 1, **dadurch gekennzeichnet, dass** der Raumkörper (12) als einheitliche bzw. monolithische Konstruktion ausgebildet ist.

3. Containermodul (10) nach einem der Ansprüche 1 oder 2, **dadurch gekennzeichnet, dass** die Seitenwände (14, 16), der Boden (18) und/oder das Dach (22) eine Stahlbetonkonstruktion enthalten.

4. Containermodul (10) nach einem der Ansprüche 1 bis 3, **dadurch gekennzeichnet, dass** die Seitenwände (14, 16), der Boden (18) und/oder das Dach (22) eine Isolationsschicht (58) aufweisen.

5. Containermodul (10) nach Anspruch 4, **dadurch gekennzeichnet, dass** die Seitenwände (14,16) und/oder das Dach (22) doppelt mit einer Innenschicht (14b, 16b, 20b) und einer Außenschicht (14a, 16a, 20a) vorgesehen sind, wobei die Innenschicht (14b, 16b, 20b) und die Außenschicht (14a, 16a, 20a) einen vorzugsweise gasdichten Zwischenraum (59) bilden, wobei die Isolationsschicht (58) in dem Zwischenraum (59) vorgesehen ist.

6. Containermodul nach Anspruch 5, **dadurch gekennzeichnet, dass** die Isolationsschicht (58) ein Inertgas umfasst.

7. Containermodul nach einem der Ansprüche 4 bis 5, **dadurch gekennzeichnet, dass** die Isolationsschicht (58) Dämmelemente bzw. -platten und/oder Vakuumdämmplatten umfasst.

8. Containermodul (10) nach einem der Ansprüche 1 bis 7, **dadurch gekennzeichnet, dass** der Boden (18) bzw. Wand (14, 16) einen doppelten Boden (36) bzw. Wand (14a, 16a, 14b, 16b) mit einem Zwischenraum (38, 59) aufweist, wobei Versorgungsinstallationen (44) in dem Zwischenraum (38, 59) geführt werden.

9. Containermodul (10) nach einem der Ansprüche 1 bis 8, **dadurch gekennzeichnet, dass** Kopplungsmittel (47) zum Andocken zumindest eines weiteren Containermoduls (10) vorgesehen sind.

10. Containermodul (10) nach einem der Ansprüche 1 bis 9, **dadurch gekennzeichnet, dass** ein Durchgang zumindest zu einem weiteren Containermodul (10) vorsehbar ist.

11. Containermodul (10) nach einem der Ansprüche 1 bis 10, **dadurch gekennzeichnet, dass** ein Fenster (34) und/oder Lichteinlässe vorgesehen sind.

12. Containermodul (10) nach einem der Ansprüche 1 bis 11, **dadurch gekennzeichnet, dass** der Raumkörper (12) eine quaderförmige oder eine sonstige stapelbare Geometrie aufweist.

13. Containermodul (10) nach einem der Ansprüche 1 bis 12, **dadurch gekennzeichnet, dass** elektrische Funktionselemente des Containermoduls (10) kabellos steuerbar ausgebildet sind.

14. Containermodul (10) nach Anspruch 9, **dadurch gekennzeichnet, dass** Abdichtungen als Expansionsdichtungen ausgebildet sind.

15. Verfahren zum Herstellen eines Containermoduls (10) gemäß einem der vorherigen Ansprüche, **dadurch gekennzeichnet, dass** der Raumkörper (12) ganz oder teilweise aus Beton mittels Beton-3D-Druckverfahren erzeugt wird.

16. Verfahren zum Herstellen eines Containermoduls (10) gemäß einem der vorherigen Ansprüche, **dadurch gekennzeichnet, dass** der Raumkörper (12) ganz oder teilweise aus einem fließfähigem und/oder verformbaren Material hergestellt wird, welches zur Herstellung des Raumkörpers geformt wird und nach der Formung aushärtet.

17. Verfahren zum Herstellen eines Containermoduls (10) gemäß einem der Ansprüche 15 bis 16, **dadurch gekennzeichnet, dass** der monolithische Raumkörper (12) ganz oder teilweise nach seinem Lebenszyklus von einer Presse zum Recyceln zerlegt wird.
